# EUROPEAN PATENT APPLICATION

(11) **EP 4 002 307 A1**
(43) Date of publication of application: **25.05.2022**
(21) Application number: 21207116.1
(22) Date of filing: 09.11.2021
(51) Int. Cl.: G07B 15/02

(54) **INFORMATION PROCESSING DEVICE, INFORMATION PROCESSING METHOD, VEHICLE SYSTEM, AND NON-TRANSITORY STORAGE MEDIUM**

(30) Priority: 11.11.2020 JP 2020188151
(71) Applicant: TOYOTA JIDOSHA KABUSHIKI KAISHA, Toyota-shi, Aichi-ken, 471-8571 (JP)
(72) Inventor: NAKASHIMA, Toyokazu, TOYOTA-SHI, AICHI-KEN, 471-8571 (JP); TAMURA, Makoto, TOYOTA-SHI, AICHI-KEN, 471-8571 (JP); MITOMA, Yusuke, TOYOTA-SHI, AICHI-KEN, 471-8571 (JP); KOTAKE, Kosuke, TOYOTA-SHI, AICHI-KEN, 471-8571 (JP); KATOH, Junko, TOYOTA-SHI, AICHI-KEN, 471-8571 (JP); KOREYASU, Noriko, TOYOTA-SHI, AICHI-KEN, 471-8571 (JP); TONEGAWA, Hiromi, TOYOTA-SHI, AICHI-KEN, 471-8571 (JP); FUJII, Aiko, TOYOTA-SHI, AICHI-KEN, 471-8571 (JP); MIYASHITA, Yuutarou, TOYOTA-SHI, AICHI-KEN, 471-8571 (JP); TSUJI, Keiko, TOYOTA-SHI, AICHI-KEN, 471-8571 (JP)
(74) Representative: Cabinet Beau de Loménie

(57) **Abstract**

An information processing device according to one aspect includes: a storage unit configured to store, for each of a plurality of areas in which a vehicle is allowed to be parked, fee data associated with fee information, the fee information being information on a parking fee; and a control unit configured to acquire vehicle data sent from a first vehicle, and calculate a parking fee corresponding to the first vehicle based on the vehicle data and the fee data when the first vehicle is parked in any of the areas.

## Description

### BACKGROUND OF THE INVENTION

### 1. Field of the Invention

The present disclosure relates to techniques for managing parking of vehicles, specifically an information processing device, an information processing method, a vehicle system, and non-transitory storage media for managing parking of vehicles.

### 2. Description of Related Art

There are parking lot systems that do not have stationary equipment such as locking plates and parking pay stations. In regard to this, Japanese Utility Model Registration No. 3225197 discloses a system in which a driver of a vehicle notifies a management device via a mobile terminal that the vehicle is parked in a parking space and that the vehicle has left the parking space, and the management device calculates a parking fee based on the received information.

### SUMMARY OF THE INVENTION

When a parking lot has no equipment for payment of a parking fee, users need to report their parking time etc. to a management device. Such a system is disadvantageous in that the users need to follow a complicated procedure.

The present disclosure provides a system for autonomously calculating parking fees.

A first aspect of the present disclosure relates to an information processing device including: a storage unit configured to store, for each of a plurality of areas in which a vehicle is allowed to be parked, fee data associated with fee information, the fee information being information on a parking fee; and a control unit configured to acquire vehicle data sent from a first vehicle, and calculate the parking fee corresponding to the first vehicle based on the vehicle data and the fee data when the first vehicle is parked in any of the areas.

A second aspect of the present disclosure relates to an information processing method including: acquiring, for each of a plurality of areas where a vehicle is allowed to park, fee data associated with information on a parking fee; acquiring vehicle data sent from a first vehicle; and calculating the parking fee corresponding to the first vehicle based on the vehicle data and the fee data when the first vehicle is parked in any of the areas.

A third aspect of the present disclosure is a vehicle system including: a first device mounted on a first vehicle; and a second device configured to manage the first vehicle. The first device is configured to send vehicle data associated with the first vehicle to the second device. The second device includes: a storage unit configured to store, for each of a plurality of areas in which a vehicle is allowed to be parked, fee data associated with information on a parking fee; and a control unit configured to receive vehicle data from the first vehicle, and calculate the parking fee corresponding to the first vehicle based on the vehicle data and the fee data when the first vehicle is parked in any of the areas.

Other aspect of the present disclosure provides a program configured to cause a computer to perform the above information processing method, or a computer-readable storage medium storing the program in a non-transitory manner.

According to the present disclosure, a system that autonomously calculates parking fees can be provided.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates an overview of a parking management system;
FIG. 2 shows components of the parking management system in more detail;
FIG. 3 illustrates parking areas that are managed by the system;
FIG. 4 shows an example of a fee database stored in a storage unit;
FIG. 5 shows an example of a vehicle database stored in the storage unit;
FIG. 6 is a flowchart of a process that is performed by a control unit in a first embodiment;
FIG. 7 is a flowchart of a process that is performed by a control unit in a second embodiment;
FIG. 8 shows an example of information that is presented to an occupant of a vehicle;
FIG. 9 shows an example of a fee database in a third embodiment; and
FIG. 10 is a flowchart of a process that is performed by a control unit in a third embodiment (modification).

### DETAILED DESCRIPTION OF EMBODIMENTS

An information processing device according to an embodiment of the present disclosure is a device configured to manage a plurality of areas that serves as parking lots and calculate a parking fee for a vehicle parked in the area. The areas to be managed by the information processing device may be any areas where parking is allowed in advance, may be private lands, or may be parking lots etc. on public roads.

The information processing device according to the embodiment includes a storage unit configured to store, for each of a plurality of areas in which a vehicle is allowed to be parked, fee data associated with fee information, the fee information being information on a parking fee. The information processing device according to the embodiment further includes a control unit configured to acquire vehicle data sent from a first vehicle, and calculate a parking fee corresponding to the first vehicle based on the vehicle data and the fee data when the first vehicle is parked in any of the areas.

The vehicle data can be data for determining whether the first vehicle is in a parked state. The control unit can determine in which area the first vehicle is parked out of the managed areas, based on the vehicle data sent from the first vehicle. The control unit calculates the parking fee in the corresponding area based on the stored fee data. According to such a configuration, it is possible to rent parking spaces on the basis of parking time without installing equipment such as a parking pay station and without requiring the users to perform any special operation.

The vehicle data may include first information, the first information being position information of the first vehicle. The control unit may be configured to identify the area where the first vehicle is parked out of the areas based on the first information and calculate the parking fee using the fee information corresponding to the identified area. According to such a configuration, it is possible to set different parking fees for each area.

The vehicle data may further include second information indicating an operating state of the first vehicle. The control unit may be configured to determine based on the first information and the second information that the first vehicle is in the parked state.

Examples of the information indicating the operating state of the vehicle include information indicating whether the ignition power is on or off, the engine speed, information indicating whether a power supply for traction is on or off, and information on whether a control device is energized. The information indicating the operating state of the vehicle may be information indicating whether the vehicle is ready to run. By using both these pieces of information and the position information, it is possible to determine whether the vehicle is parked in a predetermined area.

The control unit may be configured to determine that the first vehicle is in the parked state when the first vehicle is located in one of the areas and an engine is stopped or the power supply for traction has been off for a predetermined time or longer. Accordingly, it is possible to accurately determine that the first vehicle is not temporarily stopped but in the parked state.

The vehicle data may further include third information for determining whether the first vehicle is temporarily stopped, and the control unit may be configured not to calculate the parking fee during a period in which it is determined that the vehicle is temporarily stopped. Examples of the third information include information indicating whether hazard lights are on or off and information indicating whether a door or a cargo compartment is opened. By referring to the third information, it is possible to estimate that the vehicle is temporarily stopped for pickup or drop-off of an occupant or loading or unloading of luggage. In such a case, it is preferable not to calculate the parking fee for the vehicle. The control unit may be configured to calculate the parking fee when a period in which it is determined that the first vehicle is temporarily stopped becomes longer than a predetermined length.

The vehicle data may further include fourth information for determining whether there is an occupant in the first vehicle, and the control unit may be configured not to calculate the parking fee during a period in which it is determined that there is an occupant in the first vehicle. Examples of the fourth information include an output of a motion sensor provided in a vehicle cabin, information indicating whether a seat belt is worn, and the load weight in the vehicle.

The control unit may be configured to compare first position information included in the vehicle data and second position information indicating a position of a mobile terminal carried by the occupant of the first vehicle, and not to calculate the parking fee during a period in which a position indicated by the first position information and a position indicated by the second position information are located within a predetermined distance from each other. According to such a configuration, it is possible to calculate the parking fee only when the occupant is away from the vehicle.

The control unit may be configured to determine, based on the result of the determination, a first time when the first vehicle transitioned into the parked state and a second time when the first vehicle transitioned out of the parked state. The control unit may be configured to generate charge data for charging the parking fee corresponding to a period from the first time to the second time. For example, the charge data can be sent to a server device that processes a payment of the parking fee.

The control unit may be configured to send state data indicating that the first vehicle is a vehicle whose parking fee is to be calculated to the first vehicle whose parking fee is to be calculated, and cause display indicating that the first vehicle is a vehicle whose parking fee is to be calculated to be output via an external display device of the first vehicle. When the parking area has no locking plate or no parking stub machine, it is not possible to determine from the outside whether a proper procedure was followed to park the vehicle. Accordingly, the data indicating that the vehicle is a vehicle whose parking fee is to be calculated is sent to the vehicle and is output via the external display device. This makes it possible to determine from the outside that the proper procedure was followed to park the vehicle.

The control unit may be configured to send guidance data to a user device associated with the first vehicle when the first vehicle enters one of the areas, the guidance data being data that informs the parking fee associated with the area. For example, the user device may be an in-vehicle computer or may be the mobile terminal carried by the occupant of the first vehicle. According to such a configuration, it is possible to present the guidance on the parking fee to the occupant of the first vehicle when the first vehicle enters a predetermined area.

The storage unit may be configured to further associate and store a parking permission condition for each of the areas. For example, data that defines vehicles that are allowed to park (sizes, models, weights, etc.) or data that defines the days of the week, time of the day, etc. when parking is allowed may be stored.

The control unit may be configured to include data that informs the parking permission condition in the guidance data. For example, the device associated with the vehicle may be an in-vehicle device or a mobile terminal carried by an occupant of the vehicle. According to such a configuration, it is possible to notify the occupant of the vehicle whether the vehicle is allowed to park when the vehicle enters the predetermined area.

The control unit may be configured to include a notification in the guidance data when a vehicle that does not meet the parking permission condition enters the area in which the parking permission condition has been set. Accordingly, for example, it is possible to notify that the size of the vehicle is larger than a specified value or that no parking is allowed at that time of the day, and it is therefore possible to prevent parking under improper conditions.

The control unit may be configured to send notification data to the user device when the first vehicle transitions into the parked state in a place not associated with the charge information. The place not associated with the charge information means a place the device has not recognized as a parking lot. By giving a notification in such a case, it is possible to prevent trouble due to illegal parking etc.

The control unit may be configured to update the parking fee for each area based on the vehicle data sent from a plurality of the first vehicles in a past predetermined period. By using the vehicle data sent from the vehicles, it is possible to determine whether it is easy to utilize a certain area as a parking rod. Accordingly, it is possible to improve the utilization rate as a parking lot by dynamically changing the parking fee.

Hereinafter, specific embodiments of the present disclosure will be described with reference to the drawings. The hardware configuration, module configuration, functional configuration, etc. described in each embodiment are not intended to limit the technical scope of disclosure to these configurations unless otherwise specified.

### First Embodiment

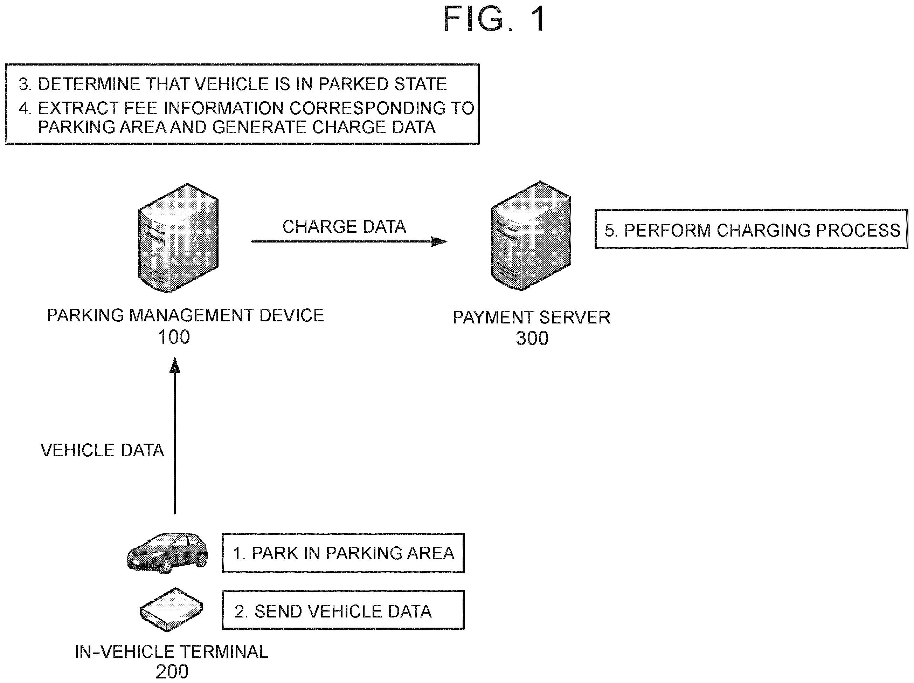

An overview of a parking management system according to a first embodiment will be given with reference to FIG. 1. The parking management system according to the present embodiment includes: a parking management device 100 that manages a plurality of areas used as parking lots (hereinafter referred to as parking areas); an in-vehicle terminal 200 mounted on a vehicle; and a payment server 300 that processes a payment of a parking fee.

The in-vehicle terminal 200 is a computer mounted on each of a plurality of vehicles being managed. The in-vehicle terminal 200 acquires vehicle data from a corresponding vehicle, and sends the acquired vehicle data to the parking management device 100 at regular intervals. The vehicle data is data for determining "whether the vehicle is in a parked state in the parking area managed by the system." In the present embodiment, the vehicle data includes position information and data indicating whether the ignition power is on or off.

The parking management device 100 is a device that detects that a vehicle has been parked in the parking area managed by the system, and calculates a parking fee for the vehicle. In the parking management system according to the present embodiment, a plurality of vehicles can be parked in any of a plurality of predetermined parking areas. For example, the parking area may be a parking lot run by a company or may be a private land provided by an individual. The parking area may be an area (parking lot) on a public road. The parking management device 100 determines, based on the vehicle data sent from the in-vehicle terminal 200, that parking of the vehicle in a certain parking area has been started and that the parking of the vehicle in the certain parking area has been ended. The parking management device 100 calculates a parking fee for the vehicle, generates charge data, and sends the charge data to the payment server 300. A driver of the vehicle can thus pay the parking fee without any special operation or procedure.

The payment server 300 is a device that processes a payment of the parking fee based on the charge data. For example, the payment server 300 may be a device that charges a credit card, or may be a device that manages electronic money, points, etc.

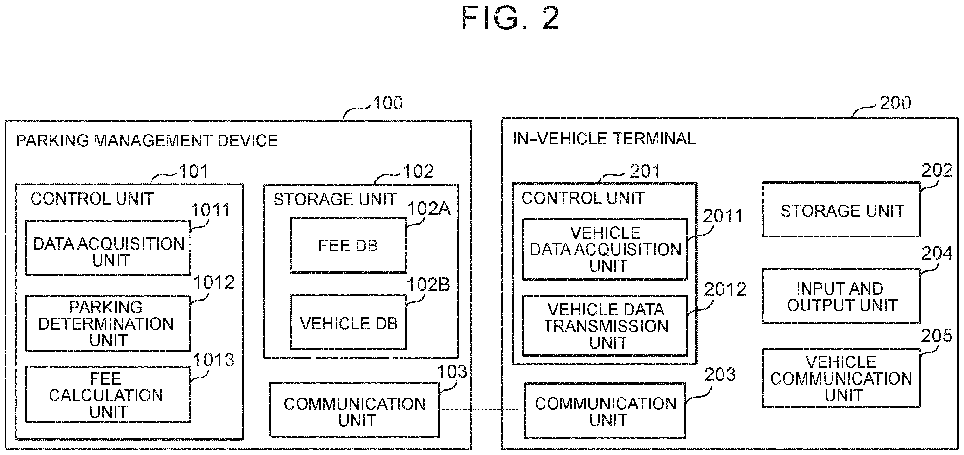

FIG. 2 shows components of the parking management system according to the present embodiment in more detail. First, the in-vehicle terminal 200 will be described. The in-vehicle terminal 200 is a computer mounted on the vehicle. The in-vehicle terminal 200 includes a control unit 201, a storage unit 202, a communication unit 203, an input and output unit 204, and a vehicle communication unit 205. The in-vehicle terminal 200 can acquire various kinds of data about traveling of the vehicle by communicating with a vehicle platform.

The control unit 201 is an arithmetic unit responsible for control that is performed by the in-vehicle terminal 200. The control unit 201 can be implemented by an arithmetic processing unit such as central processing unit (CPU). The control unit 201 includes two functional modules, namely a vehicle data acquisition unit 2011 and a vehicle data transmission unit 2012. These functional modules may be implemented by the CPU executing programs stored in the storage unit 202 that will be described later.

The vehicle data acquisition unit 2011 acquires data about the vehicle (hereinafter referred to as the vehicle data). In the present embodiment, the vehicle data includes data indicating the position information of the vehicle (first information) and data indicating the operating state of the vehicle (second information). The data indicating the operating state of the vehicle is typically data indicating whether the vehicle is ready to run, and in the present embodiment, is data indicating whether the ignition power of the vehicle is on. In this example, the vehicle is a gasoline vehicle. However, when the vehicle is an electric vehicle, data indicating whether a power supply of the vehicle (particularly, a power supply for traction) is on may be used as the data indicating the operating state of the vehicle. These items of data can be acquired from the vehicle platform via the vehicle communication unit 205 that will be described later. The position information may be acquired via a Global Positioning System (GPS) unit etc. contained in the in-vehicle terminal 200 (or provided in the vehicle). In the present embodiment, the state of the ignition power supply is described as an example of the operating state data. However, the operating state data may be data representing the operating state of an engine (e.g., engine speed etc.).

The vehicle data transmission unit 2012 sends the vehicle data acquired by the vehicle data acquisition unit 2011 to the parking management device 100 at regular intervals.

The storage unit 202 includes a main storage device and an auxiliary storage device. The main storage device is a memory into which programs to be executed by the control unit 201 and data to be used by these control programs are loaded. The auxiliary storage device is a device that stores the programs to be executed by the control unit 201 and the data to be used by these control programs. The programs to be executed by the control unit 201 may be packaged as applications and stored in the auxiliary storage device. An operating system for running these applications may be stored in the auxiliary storage device. The programs stored in the auxiliary storage device are loaded into the main storage device and executed by the control unit 201. Processes that will be described later are thus performed.

The main storage unit may include a random access memory (RAM) or a read only memory (ROM). The auxiliary storage unit may include an erasable programmable ROM (EPROM) or a hard disk drive (HDD). The auxiliary storage device may include a removable medium, that is, a portable recording medium. For example, the removable medium is a universal serial bus (USB) memory or a disc recording medium such as compact disc (CD) or digital versatile disc (DVD).

The communication unit 203 is a wireless communication interface for connecting the in-vehicle terminal 200 to a network. The communication unit 203 is configured to communicate with the parking management device 100 via, e.g., a wireless local area network (WLAN) or a mobile communication service such as third generation (3G), Long-Term Evolution (LTE), or fifth generation (5G). The input and output unit 204 is a unit that accepts an input operation performed by a user and presents information to the user. In the present embodiment, the input and output unit 204 is composed of a single touch panel display. That is, the input and output unit 204 is composed of a liquid crystal display (LCD) and control means for the LCD, and a touch panel and control means for the touch panel.

The vehicle communication unit 205 is an interface unit for communicating with the vehicle platform. The vehicle platform is a platform including a computer that performs driving control of the vehicle (e.g., an engine electronic control unit (ECU) etc.). The vehicle communication unit 205 is configured to acquire, via an in-vehicle network, data sent and received by the vehicle platform.

Next, the parking management device 100 will be described. The parking management device 100 performs a process of receiving the vehicle data from the in-vehicle terminal 200 and a process of determining, based on the received vehicle data, that parking of the vehicle in a predetermined parking area has been started and that the parking of the vehicle in the predetermined parking area has been ended. The parking management device 100 also performs a process of calculating a parking fee and generating charge data.

The parking management device 100 can be configured by a general-purpose computer. That is, the parking management device 100 can be configured as a computer including a processor such as CPU or graphics processing unit (GPU), a main storage device such as RAM or ROM, and an auxiliary storage device such as EPROM, HHD, or removable medium. For example, the removable medium may be a USB memory or a disc recording medium such as CD or DVD. An operating system (OS), various programs, various tables, etc. are stored in the auxiliary storage device. The programs stored in the auxiliary storage device are loaded into a work area of the main storage device and executed. By the execution of the programs, components etc. are controlled, so that various functions that match a predetermined purpose can be implemented. Such functions will be described later. Part or all of the functions may be implemented by a hardware circuit such as an application-specific integrated circuit (ASIC) or a field-programmable gate array (FPGA).

A control unit 101 is an arithmetic unit responsible for control that is performed by the parking management device 100. The control unit 101 can be implemented by an arithmetic processing unit such as CPU. The control unit 101 includes three functional modules, namely a data acquisition unit 1011, a parking determination unit 1012, and a fee calculation unit 1013. Each functional module may be implemented by the CPU executing the stored programs.

The data acquisition unit 1011 performs a process of acquiring vehicle data from the in-vehicle terminal 200 mounted on the vehicle managed by the system and storing the acquired vehicle data in a storage unit 102 that will be described later.

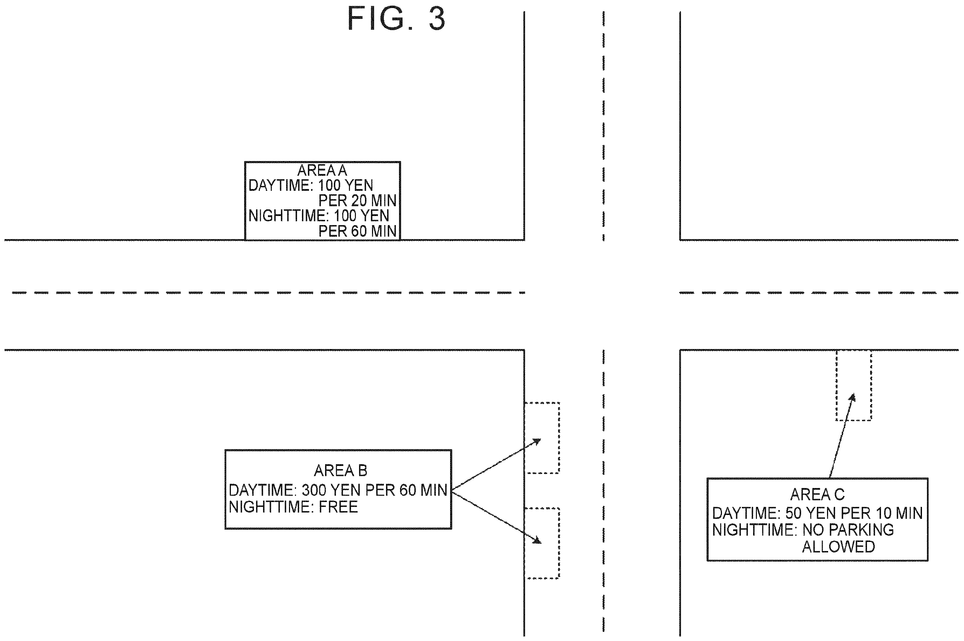

The parking determination unit 1012 determines based on the stored vehicle data that the vehicle is parked in one of the parking areas managed by the system. FIG. 3 illustrates the parking areas managed by the system. It is herein assumed that there are three parking areas A to C. The parking determination unit 1012 determines that the vehicle managed by the system is located in any of the parking areas (e.g., in the area A). The parking determination unit 1012 also determines based on the vehicle data that the vehicle is in a parked state. For example, when the ignition power has been off for a predetermined time or longer, it can be determined that the corresponding vehicle is in the parked state. The result of the determination made by the parking determination unit 1012 is sent to the fee calculation unit 1013.

The fee calculation unit 1013 calculates a parking fee to be charged, based on the result of the determination made by the parking determination unit 1012. Specifically, the fee calculation unit 1013 (1) acquires fee information associated with the parking area where the vehicle is parked, (2) determines a period during which the vehicle has been parked (parking period), and (3) calculates the parking fee based on the fee information and the parking period. A specific method will be described later. The fee calculation unit 1013 generates charge data for charging the parking fee and sends the charge data to the payment server 300.

The storage unit 102 includes a main storage device and an auxiliary storage device. The main storage device is a memory into which programs to be executed by the control unit 101 and data to be used by these control programs are loaded. The auxiliary storage device is a device that stores the programs to be executed by the control unit 101 and the data to be used by these control programs.

The storage unit 102 stores a fee database 102A and a vehicle database 102B. The fee database 102A is a database that stores data for calculating a parking fee. In the fee database 102A, the parking areas and fee information for each parking area are stored in association with each other.

The vehicle database 102B is a database that stores vehicle data acquired from the in-vehicle terminal 200. The vehicle database 102B stores a plurality of pieces of vehicle data acquired from a plurality of in-vehicle terminals 200.

The fee database 102A and the vehicle database 102B are constructed in such a manner that a program for a database management system (DBMS) executed by the processor manages data stored in the storage device. For example, the fee database 102A and the vehicle database 102B are relational databases.

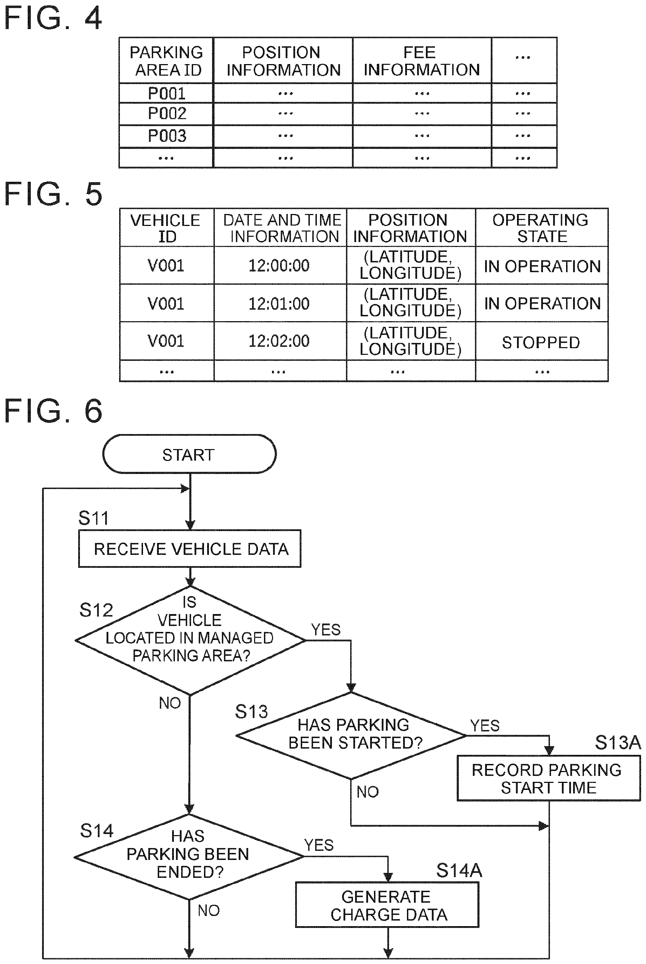

The data stored in the fee database 102A will be described with reference to FIG. 4. FIG. 4 shows an example of the data stored in the fee database 102A.

An identifier that uniquely identifies the parking area is stored in a parking area identification (ID) field. Data indicating the geographical position (range) of the parking area is stored in a position information field. Fee information associated with the parking area is stored in a fee information field. The fee information may include, e.g., a parking fee per unit time, conditions for different times of the day, a maximum charge, etc. These items of data are managed and updated by an administrator of the system.

Next, the data stored in the vehicle database 102B will be described with reference to FIG. 5. FIG. 5 shows an example of the data stored in the vehicle database 102B.

An identifier that uniquely identifies the vehicle is stored in a vehicle ID field. Date and time when the vehicle data was generated are stored in a date and time information field. Position information of the vehicle is stored in a position information field. For example, the position information may be represented by latitude and longitude. Data indicating whether the vehicle is in operation is stored in an operating state field. For example, when the engine is running or when the ignition power is on, the operating state is "in operation." When the engine is stopped or when the ignition power is off, the operating state is "stopped." The vehicle database 102B is updated at regular intervals based on the vehicle data sent from the in-vehicle terminal 200.

A communication unit 103 is a communication interface for connecting the parking management device 100 to the network. The communication unit 103 includes, e.g., a network interface board or a wireless communication module for wireless communication.

The configuration shown in FIG. 2 is by way of example only, and all or part of the functions shown in the figure may be performed using a circuit designed exclusively for those functions. The programs may be stored in or executed by a combination of a main storage device and an auxiliary storage device other than the combination shown in the figure.

FIG. 6 is a flowchart of a process that is performed by the parking management device 100. The process of the flowchart shown in FIG. 6 is performed at regular intervals for each of a plurality of vehicles while the system is in operation.

In step S11, the data acquisition unit 1011 receives vehicle data from the in-vehicle terminal 200. The received vehicle data is reflected in the vehicle database 102B.

Next, in step S12, the parking determination unit 1012 determines based on the acquired vehicle data whether the vehicle is located in the parking area managed by the system. When YES in step S12, the routine proceeds to step S13. When NO in step S12, the routine proceeds to step S14. There are cases where the parking area is indoor and the position information is acquired via satellites. In such a case, it may be determined that the "vehicle has entered the parking area," when the acquisition of the position information is interrupted near the parking area.

In step S13, it is determined whether parking of the vehicle in the parking area has been started. In this step, it is determined that parking of the vehicle in the parking area has been started, when the following conditions are met.
(1) The position information of the vehicle indicates inside of the parking area as determined in step S12.
(2) The operating state of the vehicle has been "stopped" for the predetermined time or longer.
   The predetermined time can be, e.g., a grace period before it is determined that parking has been started. For example, the predetermined time can be 5 minutes.
   When it is determined in step S13 that parking has been started, the parking start time is recorded in step S13A.

In step S14, it is determined whether the parking of the vehicle has been ended. In this step, it is determined that the parking of the vehicle in the parking area has been ended, when the following conditions are met.
(1) The parking start time has been recorded.
(2) The operating state of the vehicle is "in operation."
   When it is determined in step S14 that the parking of the vehicle has been ended, charge data is generated in step S14A.
   In step S14A, fee information corresponding to the parking area is extracted from the fee database 102A, and a parking fee for the period from the recorded parking start time to the time when it is determined that the parking has been ended is calculated. The generated charge data is sent to the payment server 300.

As described above, the parking management device 100 according to the first embodiment determines, based on the vehicle data received from the in-vehicle terminal 200, the parking area where the vehicle is parked and the parking period. The parking fee is calculated using the fee information associated with the parking area. According to such a configuration, the process of charging a parking fee can be automatically performed without requiring an occupant of the vehicle to follow any special procedure.

### Modification of First Embodiment

In the first embodiment, it is determined in step S13 that parking has been started, when the operating state has been "stopped" for the predetermined time or longer. However, even when the engine etc. is stopped, it should not be determined that parking has been started, as long as the vehicle can be considered to be temporarily stopped. Accordingly, it may be determined whether the vehicle is temporarily stopped.

For example, data indicating whether hazard lights are on may be included in the vehicle data, and the above determination regarding the parked state may be made on the condition that the hazard lights are off. Alternatively, data indicating whether there is an occupant in the vehicle may be included in the vehicle data, and the above determination regarding the parked state may be made on the condition that there is no occupant in the vehicle. Whether there is an occupant in the vehicle can be detected by, e.g., a weight sensor or seatbelt sensor mounted on the vehicle. Any data other than the data illustrated herein may be included in the vehicle data as long as it is data for determining whether the vehicle is temporarily stopped.

Position information may be acquired from a mobile terminal carried by an occupant of the vehicle, and the above determination regarding the parked state may not be made when the position information corresponding to the in-vehicle terminal 200 and the position information corresponding to the mobile terminal indicate the same location.

Even when any of these conditions is met, there are cases where it should be evaluated that the vehicle is in the parked state. An example of such a case is when the vehicle has been stopped for a long time. In view of this, when it is determined that the vehicle is temporarily stopped, the determination regarding the parked state may be made after extending the "predetermined time" described above.

### Second Embodiment

In the first embodiment, the parking management device 100 does not interact with the user from the start to the end of parking. On the other hand, a second embodiment is an embodiment in which, when the vehicle enters the parking area, the parking management device 100 sends information on the use of the parking lot (hereinafter referred to as guidance information) to the in-vehicle terminal 200 to provide the information to an occupant of the vehicle.

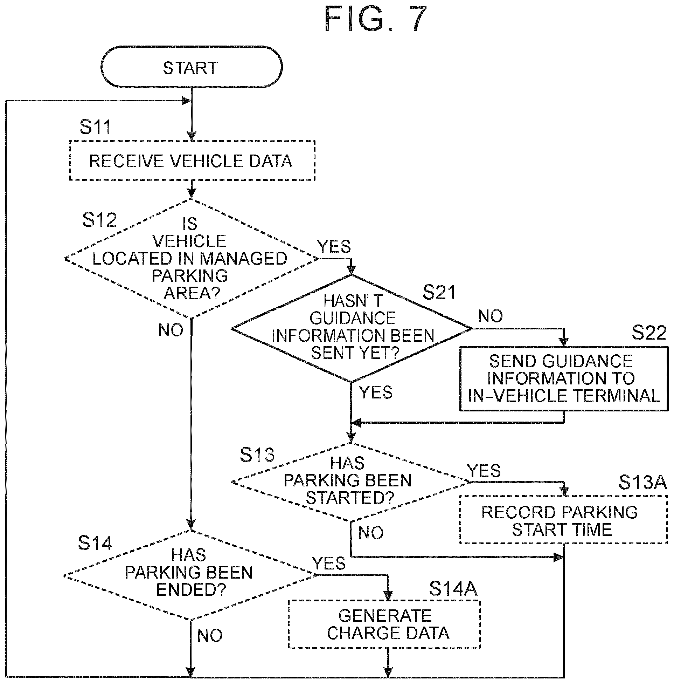

FIG. 7 is a flowchart of a process that is performed by the parking management device 100 in the second embodiment. Steps similar to those in the first embodiment are shown by dashed lines, and description thereof will be omitted.

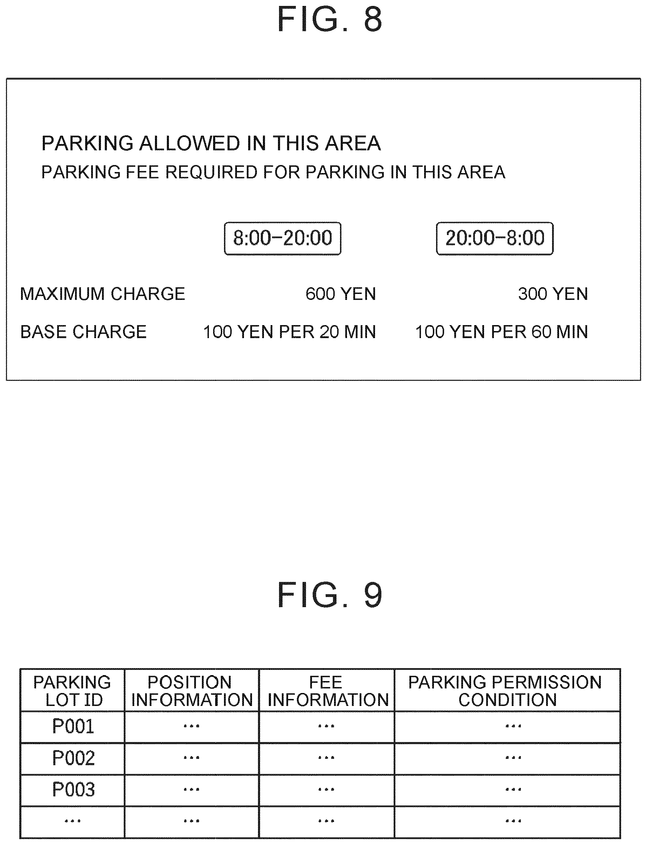

In the second embodiment, when the vehicle enters the parking area, it is first determined in step S21 whether the guidance information has already been sent to the corresponding in-vehicle terminal 200. When the guidance information has not been sent yet, the routine proceeds to step S22, and the guidance information is sent to the corresponding in-vehicle terminal 200. For example, the guidance information can be information that informs a parking fee(s) for the parking area where the vehicle is located. FIG. 8 shows an example of the guidance information that is output via the in-vehicle terminal 200 (input and output unit 204).

The guidance information may be output as an image(s) or characters, or may be output as voice etc. In the case where the vehicle has a head-up display or a head-mounted display, such information may be displayed in overlay. That is, the fee information etc. may be displayed superimposed on the parking area the driver can see through the display. In this case, the parking management device 100 may include data indicating the geographical location of the parking area in the guidance information so that the in-vehicle terminal 200 can recognize based on the data the location of the parking area in a three-dimensional space.

According to the second embodiment, it is possible to present the parking fee(s) for the parking area to the occupant of the vehicle before parking is started.

The form in which the parking fee(s) for the parking area is informed in advance is illustrated in this example. However, information that informs the parking start time and parking end time of the vehicle, or information that informs the final parking fee for the vehicle may be presented afterwards to the occupant of the vehicle.

In this example, the guidance information is sent after the vehicle enters the parking area. However, the guidance information may be sent before the vehicle enters the parking area. For example, the guidance information may be sent to the in-vehicle terminal 200 when a vehicle enters a predetermined region centered on the parking area. According to this form, the driver of the vehicle can recognize the parking fee(s) for the nearby parking area while driving the vehicle.

### Third Embodiment

In the second embodiment, the information on the parking fee(s) is presented to the user. On the other hand, a third embodiment is an embodiment in which information on a parking condition is presented to the user.

The condition that allows a vehicle to park may vary depending on the parking area. For example, there are cases where only nighttime parking is allowed in one parking area and only small vehicles are allowed to park in another parking area. In view of such cases, in the third embodiment, when the vehicle enters (or approaches) the parking area, the parking management device 100 generates guidance information informing the condition that allows a vehicle to park (hereinafter referred to as the parking permission condition), and sends the guidance information to the in-vehicle terminal 200. For example, the parking permission condition can be stored in the fee database 102A in such a manner as shown in FIG. 9. As in the second embodiment, the guidance information is provided to the occupant of the vehicle via the in-vehicle terminal 200.

### Modification of Third Embodiment

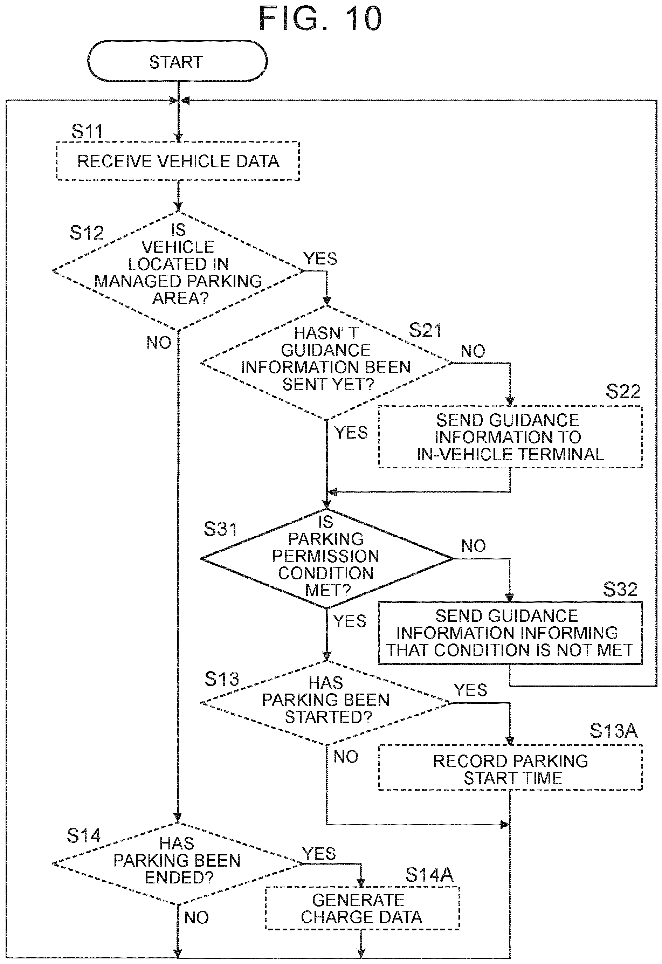

A process of determining whether the parking permission condition is met may be added to the third embodiment. FIG. 10 is a flowchart of a process that is performed by the parking management device 100 in this modification. Steps similar to those in the third embodiment are shown by dashed lines, and description thereof will be omitted.

In this modification, the in-vehicle terminal 200 includes data on the model or size of the corresponding vehicle in the vehicle data and sends the resultant vehicle data to the parking management device 100. An example of the data on the size of the vehicle is data indicating the overall length, overall height, overall width, weight, or minimum ground clearance of the vehicle. When the vehicle enters the parking area, it is determined in step S31 whether the vehicle meets the parking permission condition. For example, the determination result of this step is NO when the size of the vehicle is too large or when no parking is allowed at that time of the day. When NO in step S31, the routine proceeds to step S32, and guidance information informing that the parking permission condition is not met is sent to the corresponding in-vehicle terminal 200.

According to this modification, it is possible to notify the occupant of the vehicle that the vehicle is under such a condition that parking cannot be allowed.

### Fourth Embodiment

In the first to third embodiments, the processing of the payment of the parking fee is completed by communication between devices. However, when the parking area has no locking plate or no parking stub machine, it is not possible to determine from the outside whether a proper procedure was followed to park the vehicle. In view of this, a fourth embodiment is an embodiment in which information that the vehicle is in the parked state (information that the proper procedure was followed to park the vehicle) is output via a display device mounted on the vehicle.

In the fourth embodiment, the vehicle managed by the system has a display device (external display device) facing the outside of the vehicle. For example, the external display device may be an LCD etc. The in-vehicle terminal 200 is configured to output an image to the external display device. When the parking management device 100 determines that parking of the vehicle has been started, the parking management device 100 sends state data indicating that the vehicle is in the parked state to the in-vehicle terminal 200. The in-vehicle terminal 200 outputs, based on the state data, display indicating that the vehicle is in the parked state to the external display device of the vehicle. This output is stopped when the vehicle is no longer in the parked state (e.g., when the engine of the vehicle is operated or when the vehicle leaves the parking area).

According to the fourth embodiment, it is possible to visually determine from the outside whether the proper procedure was followed to park the vehicle. In this example, the display device capable of outputting an image is illustrated as the external display device. However, a marker light etc. indicating that the vehicle is parked may be used.

### Modification

The above embodiments are by way of example only, and the present disclosure may be modified as appropriate without departing from the spirit and scope of the present disclosure. For example, the processes and means described in the present disclosure can be combined as desired as long as no technical contradiction occurs.

The above embodiments illustrate an example in which the parking management device 100 sends the guidance information to the in-vehicle terminal 200. However, the guidance information may be sent to other device associated with the vehicle. For example, the guidance information can be sent to the mobile terminal etc. carried by the occupant of the vehicle.

In the above embodiments, it is determined that the vehicle has transitioned into the parked state in the managed parking area. However, it may be determined that the vehicle that is not located in the managed parking area has transitioned into the parked state, and the vehicle may be notified of the determination result. This configuration prevents trouble due to illegal parking.

In the above embodiments, the parking fee(s) for each parking area is a fixed fee. However, the fee database 102A stored in the storage unit 102 may be dynamically updated according to the usage situation of the parking area as a parking lot. For example, for a specific parking area, a process of relatively reducing the parking fee(s) may be performed when the utilization rate of parking spaces in this parking area in a predetermined period is lower than a first value, and a process of relatively increasing the parking fee(s) may be performed when the utilization rate of parking spaces in this parking area in the predetermined period is higher than a second value. The occupancy rate as a parking lot can thus be controlled.

The processes described as being performed by one device may be allocated to and performed by a plurality of devices. Alternatively, the processes described as being performed by different devices may be performed by one device. The type of hardware configuration (server configuration) that is used to implement each function in the computer system can be flexibly changed.

The present disclosure can also be implemented by supplying computer programs implementing the functions described in the above embodiments to a computer, and causing one or more processors of the computer to read and execute the programs. Such computer programs may be provided to the computer by a non-transitory computer-readable storage medium that can be connected to a system bus of the computer, or may be provided to the computer via a network. Examples of the non-transitory computer-readable storage medium include: any type of disk or disc such as magnetic disk (floppy (registered trademark) disk, hard disk drive (HDD), etc.) and optical disc (CD-ROM, DVD disc, Blu-ray disc, etc.); a read only memory (ROM); a random access memory (RAM); an erasable programmable ROM (EPROM); an electrically erasable programmable ROM (EEPROM); a magnetic card; a flash memory; an optical card; and any type of medium suitable for storing electronic instructions.

## Claims

1. An information processing device, comprising:
a storage unit (202) configured to store, for each of a plurality of areas in which a vehicle is allowed to be parked, fee data associated with fee information, the fee information being information on a parking fee; and
a control unit (201) configured to
acquire vehicle data sent from a first vehicle, and
calculate the parking fee corresponding to the first vehicle based on the vehicle data and the fee data when the first vehicle is parked in any of the areas.

2. The information processing device according to claim 1, wherein the vehicle data includes first information, the first information being position information of the first vehicle.

3. The information processing device according to claim 2, wherein the control unit (201) is configured to identify an area where the first vehicle has been parked out of the areas based on the first information and to calculate the parking fee using the fee information corresponding to the identified area.

4. The information processing device according to claim 2 or 3, wherein the vehicle data further includes second information indicating an operating state of the first vehicle.

5. The information processing device according to claim 4, wherein the control unit (201) is configured to determine, based on the first information and the second information, that the first vehicle is in a parked state.

6. The information processing device according to claim 5, wherein the control unit (201) is configured to determine that the first vehicle is in the parked state when the first vehicle is located in one of the areas and an engine of the first vehicle is stopped or a power supply for traction has been off for a predetermined time or longer.

7. The information processing device according to any one of claims 2 to 6, wherein:
the vehicle data further includes third information for determining whether the first vehicle is temporarily stopped; and
the control unit (201) is configured not to calculate the parking fee during a period in which it is determined that the first vehicle is temporarily stopped.

8. The information processing device according to claim 7, wherein the control unit (201) is configured to calculate the parking fee when the period in which it is determined that the first vehicle is temporarily stopped becomes longer than a predetermined length.

9. The information processing device according to any one of claims 2 to 8, wherein:
the vehicle data further includes fourth information for determining whether there is an occupant in the first vehicle; and
the control unit (201) is configured not to calculate the parking fee during a period in which it is determined that there is the occupant in the first vehicle.

10. The information processing device according to any one of claims 2 to 9, wherein the control unit (201) is configured to compare first position information included in the vehicle data and second position information indicating a position of a mobile terminal carried by the occupant of the first vehicle, and not to calculate the parking fee during a period in which a position indicated by the first position information and a position indicated by the second position information are located within a predetermined distance from each other.

11. The information processing device according to any one of claims 1 to 10, wherein the control unit (201) is configured to determine a first time when the first vehicle transitioned into a parked state and a second time when the first vehicle transitioned out of the parked state.

12. The information processing device according to claim 11, wherein the control unit (201) is configured to generate charge data for charging the parking fee corresponding to a period from the first time to the second time.

13. The information processing device according to any one of claims 1 to 12, wherein the control unit (201) is configured to send state data indicating that the first vehicle is a vehicle whose parking fee is to be calculated to the first vehicle whose parking fee is to be calculated, and to cause display indicating that the first vehicle is the vehicle whose parking fee is to be calculated to be output via an external display device of the first vehicle.

14. The information processing device according to any one of claims 1 to 13, wherein the control unit (201) is configured to send guidance data to a user device associated with the first vehicle when the first vehicle enters one of the areas, the guidance data being data that informs the parking fee associated with the area.

15. The information processing device according to claim 14, wherein the storage unit (202) is configured to further associate and store a parking permission condition for each of the areas.

16. The information processing device according to claim 15, wherein the control unit (201) is configured to include data that informs the parking permission condition in the guidance data.

17. The information processing device according to claim 16, wherein the control unit (201) is configured to include a notification in the guidance data when a vehicle that does not meet the parking permission condition enters the area in which the parking permission condition has been set, the notification notifying that the vehicle has entered the area.

18. The information processing device according to any one of claims 14 to 17, wherein the control unit (201) is configured to send notification data to the user device when the first vehicle has transitioned into a parked state in a place not associated with the fee information, the notification data notifying that the first vehicle has transitioned into the parked state.

19. The information processing device according to any one of claims 1 to 18, wherein the control unit (201) is configured to update the parking fee for each area based on the vehicle data sent from a plurality of the first vehicles in a past predetermined period.
